# FASCICULE DE BREVET EUROPEEN

(11) **EP 2 512 865 B1**
(45) Date de publication et mention de la délivrance du brevet: **09.04.2014**
(21) Numéro de dépôt: 10787846.4
(22) Date de dépôt: 26.10.2010
(51) Int. Cl.: B60R 11/02

(54) **DISPOSITIF DE SUPPORT D'OBJET POUR VEHICULE AUTOMOBILE**
OBJEKTMONTAGEVORRICHTUNG FÜR EIN KRAFTFAHRZEUG
OBJECT-MOUNTING DEVICE FOR A MOTOR VEHICLE

(30) Priorité: 15.12.2009 FR 0959010
(43) Date de publication de la demande: 24.10.2012
(73) Titulaire: Renault S.A.S., 92100 Boulogne-Billancourt (FR)
(72) Inventeur: AUBINEAU, Ivan, F-28410 Goussainville (FR); EVEN, Gerard, F-95610 Eragny (FR)
(86) Numéro de dépôt international: PCT/FR2010/052284
(87) Numéro de publication internationale: WO 2011/080428

(56) Documents cités:
- WO-A1-2006/135215
- DE-U1- 20 106 114
- FR-A1- 2 907 075
- US-A1- 2007 278 274

## Description

La présente invention concerne un dispositif de support d'objet se montant à l'intérieur d'un véhicule automobile, le dispositif comprenant une première partie de dimension adaptées pour s'insérer dans un logement en forme de fente défini dans un élément d'habillage du véhicule, et une seconde partie adaptée pour le maintien de l'objet.

L'invention concerne plus précisément un dispositif de support amovible destiné à recevoir un système de navigation du type GPS, une télécommande par exemple dudit système de navigation, d'un téléphone portable ou tout autre objet nécessitant d'être visible ou facilement accessible par l'utilisateur du véhicule.

Certains véhicules automobiles comportent différents types de rangements spécifiques, adaptés aux besoins du conducteur et des passagers, comme par exemple des rangements pour carte de paiement, pour pièces de monnaie, ou bien des vide-poches de toutes tailles.

WO 2006/135215 décrit un dispositif de support d'objet pour véhicule automobile selon le préambule de la revendication 1.

Le document FR2907075 propose ainsi un rangement spécifique pour carte de paiement ou ticket de péage. Ce rangement est formé d'un élément formant un boitier comportant une ou plusieurs fentes sur sa face avant. Ce boitier est destiné à être inséré dans un logement de réception prévu dans la planche de bord. Cependant ce type de rangement ne convient pas au support d'objet de forme plus volumineuse et plus complexe tel qu'un téléphone portable, un système de navigation ou une télécommande.

Le document WO2004/007245 propose un dispositif de support de téléphone portable sur un montant de baie du véhicule. Le support du téléphone est fixé sur le véhicule et, par conséquent est inamovible sans outil spécifique. Lorsque le véhicule est stationné, ce type de support vide peut attirer l'attention de voleurs indiquant qu'un téléphone, un système de navigation ou une télécommande peut être rangée dans la boite à gants, et incite donc cette personne mal intentionnée à commettre une effraction du véhicule.

Afin d'éviter ce genre de problèmes, il existe des supports amovibles. Ce type de support amovible est généralement composé d'une ventouse venant se fixer sur le pare-brise et d'un bras de support pour maintenir un objet spécifique. Cependant, ces dispositifs placés sur le pare-brise limitent le champ de vision du conducteur engendrant des problèmes de sécurité lors de la conduite. De plus ces dispositifs sont généralement complexes à mettre en oeuvre car la fixation de la ventouse se fait en générale à l'aide de système de vissage ou de levier. Or, un mauvais montage de la ventouse peut entrainer son décollement du pare-brise et la chute du support pouvant détériorer l'objet maintenu.

La présente invention a donc pour objet de fournir un dispositif de support amélioré afin de palier à ces inconvénients en proposant un dispositif simple et facilement amovible, permettant de maintenir un objet spécifique sans altérer le champ de vision du conducteur du véhicule.

A cet effet l'invention propose un dispositif de support d'objet se montant à l'intérieur d'un véhicule automobile, le dispositif comprenant une première partie de dimension adaptées pour s'insérer dans un logement en forme de fente défini dans un élément d'habillage du véhicule, et une seconde partie adaptée pour le maintien de l'objet, caractérisé en ce que la première partie a la forme d'une plaque dont l'extrémité a des dimensions sensiblement égales à celles d'une carte de paiement au format standard de manière à pouvoir être insérée dans un logement pour carte de paiement au format standard.

Cette invention permet avantageusement d'utiliser un logement existant de faible épaisseur déjà présent dans le véhicule pour adapter un dispositif simple et facilement amovible de support d'objet, monté sensiblement perpendiculairement à la fente.

Selon l'invention la première partie comprend un moyen de blocage du dispositif de support dans le logement.

Le moyen de blocage est formé d'une languette flexible définie dans le corps de la première partie par une ouverture en U, rattachée à la première partie par la portion ouverte du U, et s'étendant, dans sa position de repos, en s'éloignant légèrement du plan supérieur de la première partie.

L'extrémité libre de la languette forme un premier bossage et la languette présente une rainure définie entre le premier bossage et un second bossage.

La rainure est apte à coopérer avec le bord supérieur du logement pour verrouiller le dispositif de support dans le logement.

La première partie et la seconde partie peuvent être liées entre elles par une liaison rotule.

La seconde partie peut être adaptée pour le maintien d'une télécommande, d'un téléphone portable et/ou d'un système de navigation.

L'invention propose aussi un véhicule automobile comprenant une planche de bord comportant un logement pour carte de paiement ou ticket de péage au format standard, le véhicule comportant un dispositif de support décrit précédemment.

D'autres caractéristiques et avantages de l'invention apparaîtront à la lecture de la description d'un exemple qui va maintenant en être fait en se référant aux dessins annexés, sur lesquels :
La figures 1 est une vue partielle d'une planche de bord comprenant un dispositif de support de carte de paiement.
La figure 2 est une vue du dispositif de support de l'invention.
La figure 3 est une vue du dispositif de support de la figure 2 inséré dans un rangement pour carte de paiement.
La figure 4 est une vue en coupe longitudinale du dispositif de support de la figure 3.

En référence aux figures, un véhicule automobile comprend une façade de planche de bord 1. La planche de bord 1 comporte un logement 2 pour recevoir un ticket de péage ou une carte de paiement au format standard d'environ 8,5 cm de longueur, 5,4 cm de largeur et 1 mm d'épaisseur. Ce logement 2 sensiblement parallélépipédique débouche sur la façade de la planche de bord 1 par un orifice rectangulaire, aussi appelé par la suite fente, permettant l'insertion de la carte de paiement dans le logement 2. La longueur de ce logement 2 est donc inférieure ou égale à 8,5 cm, sa largeur supérieure ou égale à 5,4 mm et sa hauteur comprise entre 1 et 5 mm.

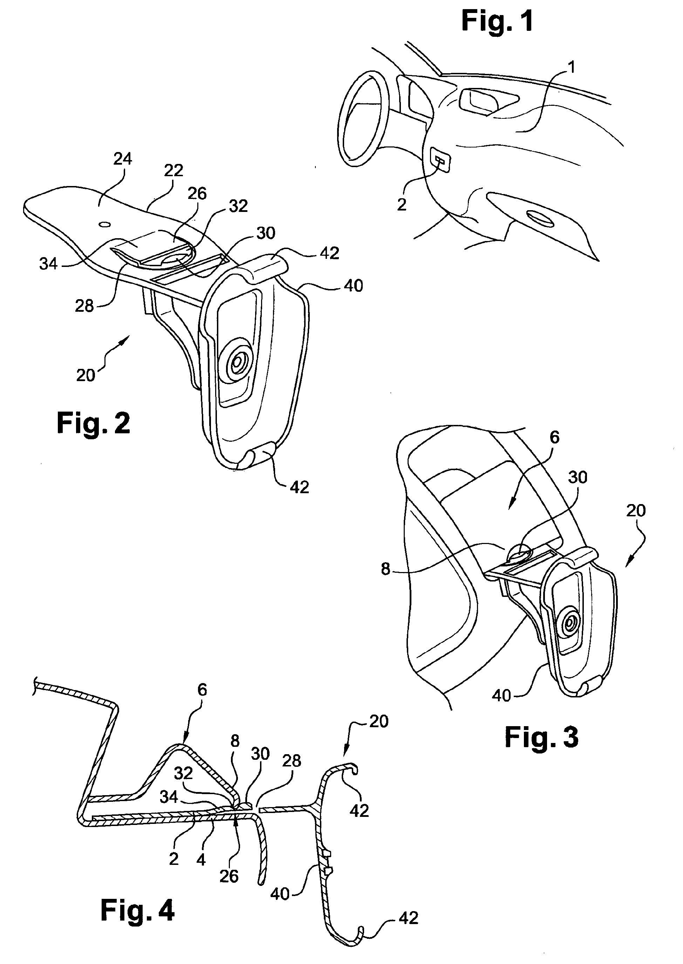

Un autre mode de réalisation du logement 2 est représenté aux figures 3 et 4. Le logement 2 pour carte de paiement ou ticket de péage est alors défini par l'espace entre une surface plane 4 de la planche de bord 1 et un élément d'habillage 6, ce dernier étant distant de quelques millimètres, préférentiellement entre 1 et 5 mm, de la surface plane 4.

Le bord supérieur 8 de la fente est formé par une paroi libre de part et d'autre de l'ouverture de la fente.

De plus, afin de permettre une meilleure préhension de la carte de paiement, la paroi formant le bord supérieur 8 de la fente comporte un renfoncement vers le fond du logement 2 permettant ainsi à un doigt de l'utilisateur d'avoir une plus grande surface de contact avec la carte de paiement pour la retirer de son logement.

En référence à la figure 2, le dispositif de support 20 par exemple pour une télécommande, pour un dispositif de navigation, un téléphone portable ou plus généralement dénommé par la suite objet maintenu (non représenté), comprend une première partie 22 formant une plaque dont l'extrémité 24 est adaptée pour être introduite dans le logement 2 de support de carte de paiement décrit précédemment.

Le dispositif de support 20 comporte également une seconde partie 40 sensiblement perpendiculaire à la première parte 22, et destinée au maintien de l'objet maintenu. Cette seconde partie 40 est liée à la première partie 22 de manière fixe comme sur les figures, ou avec une liaison rotule par exemple pour pouvoir orienter l'objet maintenu en fonction de l'utilisateur.

Cette seconde partie 40 comprend des moyens de maintien 42 adaptés pour coopérer avec l'objet maintenu. Ces moyens de maintiens 42 peuvent être des clips, des glissières ou de tout autre forme.

La plaque 22 formant la première partie comprend un moyen de blocage 26 du dispositif de support 20 dans le logement 2. Ce moyen de blocage 26 est formé d'une languette flexible définie dans le corps de la plaque par une ouverture en U 28 dont la portion ouverte du U est dirigée vers l'extrémité 24 destinée à être introduite dans le logement 2. Cette languette flexible 26 est rattachée à la plaque 22 par la portion ouverte du U et s'étend, dans sa position de repos, en s'éloignant légèrement du plan supérieur de la plaque 22.

L'extrémité libre 30 de la languette 26 forme un premier bossage permettant à l'utilisateur d'exercer une pression sur la languette 26. La languette 26 présente également une rainure 32 définie entre le premier bossage 30 et un second bossage 34.

Dans sa position de blocage, lorsque la plaque 22 du dispositif est insérée dans le logement 2, la languette flexible 26 se situe sensiblement dans le plan de la plaque 22 et exerce une force de rappel vers sa position de repos.

L'extrémité de la paroi formant le bord supérieur 8 de la fente est alors positionnée dans la rainure 32 bloquant ainsi le dispositif de support dans le logement 2. L'extrémité libre 30 de la languette 26 est alors positionnée au niveau du renfoncement de la paroi formant le bord supérieur 8.

Pour débloquer le dispositif de support l'utilisateur exerce une pression sur ladite extrémité libre 30 de la languette flexible 26 de manière à libérer de la rainure 32, le bord supérieur 8 de la fente et pouvoir ainsi extraire la plaque 22 du logement 2.

Cette invention permet avantageusement d'utiliser un support de rangement de carte de paiement pour adapter un dispositif simple et facilement amovible de support de télécommande ou tout autre objet..

De plus, ce dispositif n'altère pas le champ de vision du conducteur du véhicule car il est positionné au niveau de la planche de bord.

## Revendications

1. Dispositif de support d'objet se montant à l'intérieur d'un véhicule automobile, le dispositif (20) comprenant une première partie (22) de dimension adaptées pour s'insérer dans un logement (2) en forme de fente défini dans un élément d'habillage (1,6) du véhicule, et une seconde partie (40) adaptée pour le maintien de l'objet, **caractérisé en ce que** la première partie (22) a la forme d'une plaque dont l'extrémité (24) a des dimensions sensiblement égales à celles d'une carte de paiement au format standard de manière à pouvoir être insérée dans un logement (2) pour carte de paiement au format standard, la première partie (22) comprenant un moyen de blocage (26) du dispositif de support (20) dans le logement (2), le moyen de blocage (26) étant formé d'une languette flexible définie dans le corps de la première partie (22) par une ouverture en U (28), rattachée à la première partie (22) par la portion ouverte du U, et s'étendant, dans sa position de repos, en s'éloignant légèrement du plan supérieur de la première partie (22), l'extrémité libre de la languette (26) formant un premier bossage (30) tandis que la languette (26) présente une rainure (32) définie entre le premier bossage (30) et un second bossage (34), la rainure (32) est apte à coopérer avec un bord supérieur (8) du logement (2) pour verrouiller le dispositif de support dans le logement.

2. Dispositif de support selon la revendication précédente, **caractérisé en ce que** la première partie (22) et la seconde partie (40) sont liées entre elles par une liaison rotule.

3. Dispositif de support selon la revendication 1 ou 2, **caractérisé en ce que** une seconde partie (40) est adaptée pour le maintien d'une télécommande, d'un téléphone portable et/ou d'un système de navigation.

4. Véhicule automobile comprenant une planche de bord (1) comportant un logement (2) pour carte de paiement ou ticket de péage au format standard, **caractérisé en ce qu**'il comporte un dispositif de support (20) selon l'une quelconque des revendications précédentes.

## Patentansprüche

1. Objektstützvorrichtung, die im Innern eines Kraftfahrzeugs montiert werden kann, wobei die Vorrichtung (20) einen ersten Teil (22) mit geeigneten Abmessungen, so dass er in eine spaltförmige Aufnahme (2), die in einem Verkleidungselement (1, 6) des Fahrzeugs definiert ist, eingeführt werden kann, und einen für das Halten des Objekts geeigneten zweiten Teil (40) umfasst, **dadurch gekennzeichnet, dass** der erste Teil (22) die Form einer Platte hat, deren Ende (24) Abmessungen hat, die im Wesentlichen denen einer Zahlungskarte mit Standardformat entsprechen, so dass er in eine Aufnahme (2) für eine Zahlungskarte mit Standard-format eingeführt werden kann, wobei der erste Teil (22) ein Mittel (26) zum Blockieren der Stützvorrichtung (20) in der Aufnahme (2) umfasst, wobei das Blockiermittel (26) aus einer flexiblen Zunge gebildet ist, die durch eine U-förmige Öffnung (28) im Körper des ersten Teils (22) definiert ist, über den offenen Abschnitt des U am ersten Teil (22) angebracht ist und sich in ihrer Ruheposition leicht beabstandet von der oberen Ebene des ersten Teils (22) erstreckt, wobei das freie Ende der Zunge (26) einen ersten Buckel (30) bildet, während die Zunge (26) eine zwischen dem ersten Buckel (30) und einem zweiten Buckel (34) definierte Rille (32) aufweist, wobei die Rille (32) geeignet ist, mit einem oberen Rand (8) der Aufnahme (2) zusammenzuwirken, um die Stützvorrichtung in der Aufnahme zu verriegeln.

2. Stützvorrichtung nach dem vorhergehenden Anspruch, **dadurch gekennzeichnet, dass** der erste Teil (22) und der zweite Teil (40) über eine Kugelgelenkverbindung miteinander verbunden sind.

3. Stützvorrichtung nach Anspruch 1 oder 2, **dadurch gekennzeichnet, dass** ein zweiter Teil (40) zum Halten einer Fernbedienung, eines Mobiltelefons und/oder eines Navigationssystems geeignet ist.

4. Kraftfahrzeug, umfassend ein Armaturenbrett (1), das eine Aufnahme (2) für eine Zahlungskarte oder einen Mautschein in Standardformat umfasst, **dadurch gekennzeichnet, dass** es eine Stützvorrichtung (20) nach einem der vorhergehenden Ansprüche umfasst.

## Claims

1. Object-supporting device that is mounted inside a motor vehicle, the device (20) comprising a first part (22) having suitable dimensions for insertion into a housing (2) in the form of a slot defined in a trim element (1, 6) of the vehicle, and a second part (40) suitable for holding the object, **characterized in that** the first part (22) is in the form of a plate, the end (24) of which has dimensions approximately the same as those of a standard format payment card such as to be able to be inserted into a housing (2) for a standard format payment card, the first part (22) comprising a means (26) for immobilizing the supporting device (20) in the housing (2), the immobilizing means (26) being formed by a flexible tab which is defined in the body of the first part (22) by a U-shaped opening (28), is attached to the first part (22) by the open portion of the U and extends, in its rest position, slightly away from the top plane of the first part (22), the free end of the tab (26) forming a first boss (30), while the tab (26) has a groove (32) defined between the first boss (30) and a second boss (34), the groove (32) being able to engage with an upper edge (8) of the housing (2) in order to lock the supporting device in the housing.

2. Supporting device according to the preceding claim, **characterized in that** the first part (22) and the second part (40) are connected together by a ball-joint connection.

3. Supporting device according to Claim 1 or 2, **characterized in that** a second part (40) is suitable for holding a remote control, a cell phone and/or a navigation system.

4. Motor vehicle comprising a dashboard (1) having a housing (2) for a standard format payment card or toll ticket, **characterized in that** it has a supporting device (20) according to any one of the preceding claims.
